# EUROPÄISCHE PATENTSCHRIFT

(11) **EP 1 115 604 B1**
(45) Veröffentlichungstag und Bekanntmachung des Hinweises auf die Patenterteilung: **27.08.2003**
(21) Anmeldenummer: 99939367.1
(22) Anmeldetag: 18.06.1999
(51) Int. Cl.: B60T 13/68, B60T 8/36

(54) **MAGNETVENTIL, INSBESONDERE FÜR EINE SCHLUPFGEREGELTE, HYDRAULISCHE FAHRZEUGBREMSANLAGE**
SOLENOID VALVE, ESPECIALLY FOR AN ANTI-SLIP AUTOMOTIVE HYDRAULIC BRAKING SYSTEM
ELECTRO-VALVE, NOTAMMENT DESTINEE AU SYSTEME DE FREINAGE HYDRAULIQUE ET ANTI-PATINAGE D'UN VEHICULE

(30) Priorität: 24.09.1998 DE 19843762
(43) Veröffentlichungstag der Anmeldung: 18.07.2001
(73) Patentinhaber: ROBERT BOSCH GMBH, 70442 Stuttgart (DE)
(72) Erfinder: KIRSCHNER, Martin, D-87549 Rettenberg (DE)
(86) Internationale Anmeldenummer: DE9901789
(87) Internationale Veröffentlichungsnummer: WO00018628

(56) Entgegenhaltungen:
- EP-A- 0 288 252
- DE-A- 4 142 004
- DE-A- 4 337 435
- US-A- 4 656 448

## Beschreibung

### Stand der Technik

Die Erfindung geht aus von einem Magnetventil, insbesondere für eine schlupfgeregelte, hydraulische Fahrzeugbremsanlage, nach der Gattung des Patentanspruchs 1.

Ein solches Magnetventil ist aus der DE 43 37 435 A1 bekannt. Das bekannte Magnetventil hat eine in einen Ventilblock hineinragende Führungshülse, innerhalb der ein Anker und ein Ventilschließkörper relativ zu einem Magnetkem und einem Ventilsitz beweglich angeordnet sind. Die Führungshülse erstreckt sich durch eine Ventilträgerbuchse, welche in eine im Ventilblock gebildete Aufnahmebohrung eingesetzt und dort verstemmt ist.

Die Führungshülse weist an ihrer radial äußeren Umfangsfläche eine umlaufende, nach radial außen gerichtete Sicke auf, welche in eine Ringausnehmung der Ventilträgerbuchse eingreift. Hierdurch wird die Führungshülse an der Ventilträgerbuchse axial befestigt. Die Ringausnehmung wird hergestellt, indem in der Ventilträgerbuchse zunächst eine axiale Bohrung erzeugt wird, welche sich durch einen konisch-geraden Übergangsabschnitt verjüngt. Die Führungshülse wird anschließend in die Bohrung eingeschoben bis die bogenförmige Sicke dem konisch-geraden Übergangsabschnitt der Ventilträgerbuchse gegenüberliegt. Dann wird in die Stirnseite der Ventilträgerbuchse eine kerbartige Ringnut eingepreßt, wodurch ein Werkstoffwulst entsteht, welcher die Sicke überdeckt. Zur Abdichtung des Magnetventils nach außen ist ein Dichtring zwischen der Führungshülse und der Innenwand der Aufnahmebohrung vorgesehen.

Das bekannte Magnetventil hat den Nachteil, daß bedingt durch die ungünstigen Schmiegungsverhältnisse noch Spalte zwischen der Sicke der Führungshülse und dem konischen Übergang der Ventilträgerbuchse vorhanden sind, durch welche Hydraulikflüssigkeit strömen kann. Insbesondere die Schmiegung zwischen der kreisbogenförmigen Sicke und dem konisch-geraden Übergangsabschnitt der Ventilträgerbuchse ist unzureichend für eine Abdichtung. Daher ist ein zusätzlicher Dichtring notwendig, um die Aufnahmebohrung nach außen hin abzudichten.

### Vorteile der Erfindung

Der erfindungsgemäße Ventilblock mit den Merkmalen des Patentanspruchs 1 hat demgegenüber den Vorteil, daß die ebenen Stirnflächen des Flansches Dichtflächen bilden, welche komplementär zur ebenen Stirnfläche des Absatzes sind und plan an ihnen und am Verstemmungswulst anliegen, wodurch sie das Magnetventil spaltlos abdichten. Deshalb kann auf zusätzliche Dichtungen verzichtet werden. Durch die Ausbildung des Flansches als zwischenraumlose Faltung wird die Wandstärke des Flansches an seiner Einspannstelle in der Ventilträgerbuchse verdoppelt, was sich günstig auf die Einspannsteifigkeit und -festigkeit auswirkt. Zudem kann hierdurch auf zusätzliche, vom angeformten Flansch umgriffene Zwischenkörper verzichtet werden.

Durch die in den Unteransprüchen aufgeführten Maßnahmen sind vorteilhafte Weiterbildungen und Verbesserungen des im Patentanspruch 1 angegebenen Magnetventils möglich.

Besonders vorteilhaft ist, daß sich der Flansch bis an die radial innere Umfangswand der Ventilträgerbuchse erstreckt. Hierdurch kann die radial äußere Umfangsfläche des Flansches als zusätzliche Dichtkante wirken.

### Zeichnungen

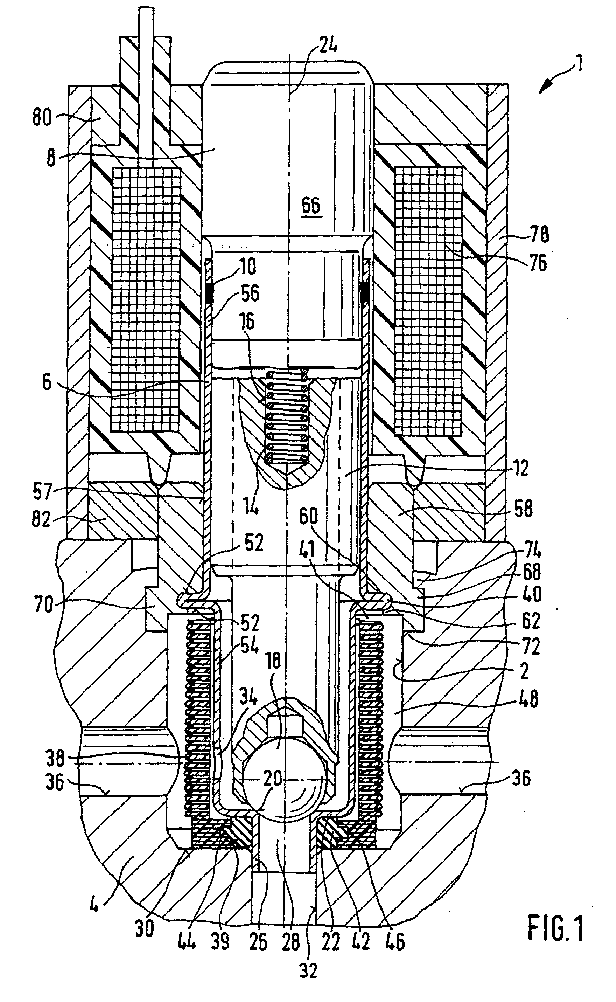

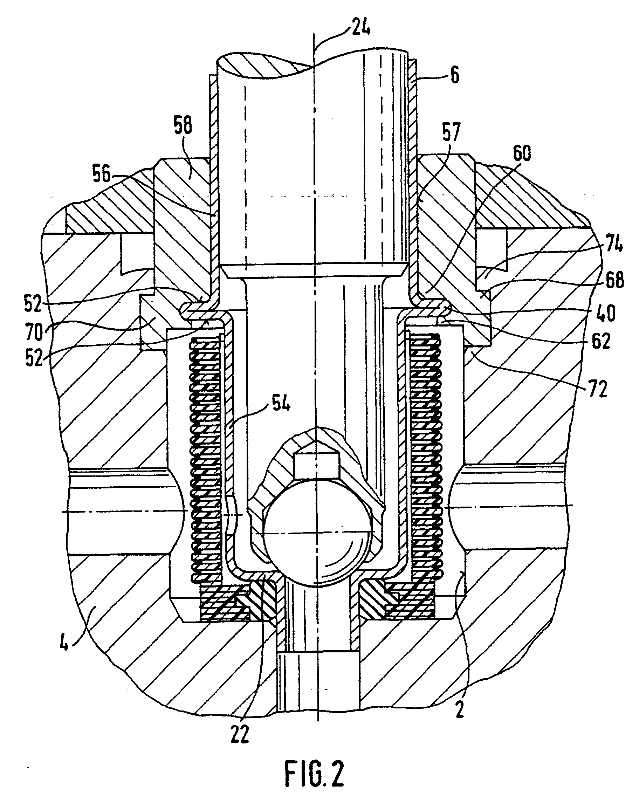

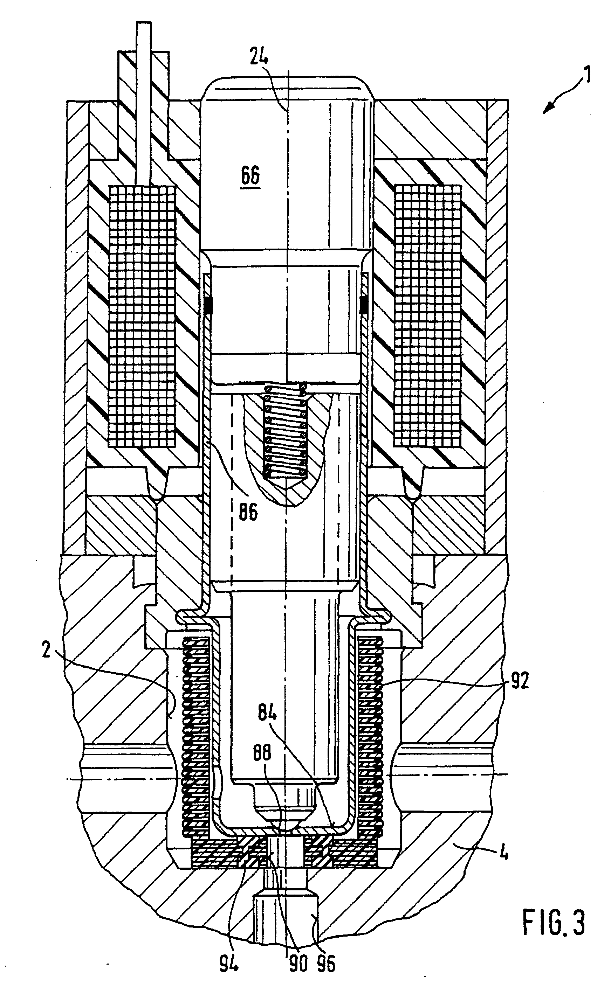

Ausführungsbeispiele der Erfindung sind in den Zeichnungen dargestellt und in der nachfolgenden Beschreibung näher erläutert. Es zeigen Figur 1 einen Längsschnitt durch ein bevorzugtes Ausführungsbeispiel gemäß der Erfindung, Figur 2 einen vergrößerten Ausschnitt aus Fig.1 und Fig.3 einen Längsschnitt durch ein weiteres Ausführungsbeispiel gemäß der Erfindung.

### Beschreibung der Ausführungsbeispiele

Die in Fig.1 dargestellte bevorzugte Ausführungsform eines Magnetventils 1 gemäß der Erfindung ist in einer Aufnahmebohrung 2 eines Ventilblocks 4 aufgenommen, welcher einen Teil eines im übrigen nicht dargestellten Hydraulikaggregats für schlupfgeregelte Bremsanlagen von Kraftfahrzeugen bildet. Das Magnetventil 1 ist ein 2/2-Wege-Auslaßventil, welches in seiner in Fig.1 dargestellten Grundstellung den Rückfluß von Bremsflüssigkeit aus dem Radbremszylinder zu einer Rückförderpumpe sperrt.

Das Magnetventil 1 weist eine Führungshülse 6 auf, in deren aus dem Ventilblock 4 herausragendes offenes Ende ein Magnetkern 8 teilweise eingesteckt und an seinem radial äußeren Umfang durch eine umlaufende Schweißung 10 mit der Führungshülse 6 druck- und fluiddicht verbunden ist. In axialer Richtung schließt sich dem Magnetkern 8 ein innerhalb der Führungshülse 6 axial verschieblich aufgenommener Anker 12 an, der sich mit seinem vom Ventilblock 4 wegweisenden Ende durch eine Ventilschließfeder 14 am Magnetkern 8 abstützt, welche in eine Sackbohrung 16 im Anker 12 eingesetzt ist. Am anderen, verjüngten Ende des verschieblichen Ankers 12 ist ein Sackloch angeordnet, in welches ein Ventilschließkörper, vorzugsweise eine gehärtete Kugel 18 eingesetzt ist. Die Kugel 18 wird durch den Druck der Ventilschließfeder 14 in einen Ventilsitz 20 gedrückt. Das Magnetventil 1 befindet sich dann in seiner stromlos geschlossenen Grundstellung.

Die Führungshülse 6 hat an ihrem vom Magnetkern 8 abgewandten Ende einen angeformten Boden 22, in welchem der Ventilsitz 20 als eine mit der Magnetventilachse 24 koaxiale Öffnung gebildet ist. Mit gleichem Innendurchmesser wie der Ventilsitz 20 und koaxial mit diesem erstreckt sich vom Boden 22 der Führungshülse 6 ein angeformter hülsenförmiger Fortsatz 26 weg, welcher einen Ventilauslaß 28 bildet. Die Aufnahmebohrung 2 des Magnetventils 1 ist eine Sacklochbohrung im Ventilblock 4, in deren Boden 30 ein Auslaßkanal 32 des Ventilblocks 4 mündet. Der den Ventilauslaß 28 bildende hülsenförmige Fortsatz 26 ist in den bodenseitigen Auslaßkanal 32 der Aufnahmebohrung 2 eingesetzt.

Die Führungshülse 6 weist an ihrem vom Magnetkern 8 abgewandten Ende einen als Querloch ausgebildeten Ventileinlaß 34 auf, welcher mit Einlaßkänalen 36 des Ventilblocks 4 kommuniziert. Die Einlaßkanäle 36 bestehen in radialen Bohrungen im Ventilblock 4 quer zur Magnetventilachse 24.

Dem Ventileinlaß 34 und den Einlaßkanälen 36 ist ein becherförmiges Filterelement 38 zwischengeordnet, welches über das vom Magnetkern abgewandte Ende der Führungshülse 6 gestülpt ist und die Führungshülse insbesondere im Bereich des Ventileinlaßes 34 umschließt. Der Boden des Filterelements 38 weist eine mit der Magnetventilachse 24 koaxiale Filteröffnung 39 auf, durch welche der hülsenförmige Fortsatz 26 der Führungshülse 6 ragt. Das Filterelement 38 ist nach oben hin offen und erstreckt sich in axialer Richtung bis an einen Flansch 40 der Führungshülse 6. Das Filterelement 38 ist vorzugsweise ein spritzgegossenes Kunststoffteil mit übereinander angeordneten Ringen, die durch Längsrippen in axialem Abstand zueinander gehalten sind. Zwischen dem oberen Ende des Filterelements 38 und dem Flansch 40 besteht ein axialer Filterspalt 41, dessen lichte Höhe nicht größer ist als die Maschenhöhe des Filterelements 38.

Auf den bodenseitigen, hülsenförmigen Fortsatz 26 der Führungshülse 6 ist ein Dichtring 42 aufgesteckt, welcher die Einlaßkanäle 36 gegenüber dem Auslaßkanal 32 abdichtet. Der Dichtring 42 trägt das Filterelement 38, indem er an seiner radial äußeren Umfangsfläche einen Ringvorsprung 44 aufweist, welcher in eine radial innere Ringnut 46 im Filterelement 38 eingreift. Der Dichtring 42 ist somit im Filterelement 38 integriert und wird bei der Montage zusammen mit dem Filterlement 38 auf die Führungshülse 6 aufgesteckt. Der Dichtring 42 ist etwas dicker als das Filterelement 38 im Anschlußbereich, damit die Dicht- und Einspannkräfte allein vom Dichtring 42 aufgenommen werden. Der Dichtring 42 greift sowohl am Boden 22 der Führungshülse 6 als auch am Boden 30 der Aufnahmebohrung 2 an. Zur Verbindung der Einlaßkanäle 36 untereinander ist zwischen der radial äußeren Umfangsfläche des Filterlements 38 und der radial inneren Wand der Aufnahmebohrung 2 ein Ringraum 48 gebildet.

Der Flansch 40 ist an der Führungshülse 6 als eine nach radial außen weisende Faltung angeformt und hat ebene, sich quer zur Magnetventilachse 24 erstreckende Stirnabschnitte 52, welche ohne Zwischenraum aneinander anliegen, wie Fig.2 in vergrößerter Weise zeigt. Hierdurch werden die Biegeradien sehr klein, so daß die Flanschkontur kantenartig ausgeprägt ist. Der als Faltung ausgebildete Flansch 40 wird durch Umformen, z.B. durch eine Stauchung der Führungshülse 6 erzeugt und trennt einen zum Boden 22 der Führungshülse 6 weisenden durchmesserkleineren Abschnitt 54 von einem zum offenen Ende der Führungshülse 6 weisenden durchmessergrößeren Abschnitt 56.

Die Führungshülse 6 erstreckt sich durch eine Öffnung 57 einer Ventilträgerbuchse 58 und wird von dieser getragen. Die Ventilträgerbuchse 58 hat an ihrem zum Boden 22 der Führungshülse 6 weisenden Ende einen radial inneren Absatz 60, an welchem der Flansch 40 der Führungshülse 6 anliegt. Hierbei erstreckt sich der Flansch 40 bis an die radial innere Umfangswand der Ventilträgerbuchse 58. Der Flansch 40 ist durch eine erste, innere Verstemmung 62 gegen den radial inneren Absatz 60 der Führungshülse 6 fluid- und druckdicht verspannt. Dazu wird vom Bohrungsrand des zum Boden 22 der Führungshülse 6 weisenden Endes der Ventilträgerbuchse 58 her Werkstoff gegen den Flansch 40 der Führungshülse 6 gedrängt, wodurch ein den Flansch 40 überdeckender Werkstoffwulst entsteht.

Die Ventilträgerbuchse 58, die Führungshülse 6 und die von ihr getragenen Bauteile wie Magnetkern 8, Anker 12, Ventilschließfeder 14, Kugel 18 und Filterlement 38 bilden zusammen eine Ventilgruppe 66, welche als vormontierte Einheit mit eingestelltem Ventilhub in die Aufnahmebohrung 2 des Ventilblocks 4 eingesetzt wird.

Die Ventilträgerbuchse 58 hat an ihrem zum Boden 22 der Führungshülse 6 weisenden Ende einen radial äußeren Absatz 68, welcher im wesentlichen in derselben radialen Ebene wie ihr radial innerer Absatz 60 liegt. Dadurch wird am zum Boden 22 der Führungshülse 6 weisenden Ende der Ventilträgerbuchse 58 ein sich nach radial außen erstreckender Sockelring 70 gebildet, welcher beim Einsetzen der Ventilgruppe 66 in den Ventilblock 4 gegen einen radial inneren Absatz 72 der Aufnahmebohrung 2 durch eine zweite, äußere Verstemmung 74 verspannt wird. Die zweite, äußere Verstemmung 74 erfolgt durch Werkstoffverdrängung vom Bohrungsrand der Aufnahmebohrung 2 gegen den radial äußeren Absatz 68 der Ventilträgerbuchse 58. Durch die zweite, äußere Verstemmung 74 wird der Sockelring 70 gegen den radial inneren Absatz 72 der Aufnahmebohrung 2 gespannt und zugleich werden die Einlaßkanäle 36 gegenüber dem Auslaßkanal 32 abgedichtet, indem der Dichtring 42 zwischen dem Boden 30 der Aufnahmebohrung 2 und dem Boden 22 der Führungshülse 6 eingespannt und axial zusammengedrückt wird. Zudem sorgt die zweite, äußere Verstemmung 74 für eine die druck- und fluiddichte Fixierung der Ventilträgerbuchse 58 in der Aufnahmebohrung 2, so daß der von Hydraulikflüssigkeit durchströmte Ringraum 48 gegenüber dem Äußeren des Ventilblocks 4 ohne zusätzliche Dichtungen abgedichtet ist.

Nach dem Verstemmen der Ventilgruppe 66 in der Aufnahmebohrung 2 wird auf den aus dem Ventilblock 4 herausragenden Teil der Ventilgruppe 66 eine elektrische Spule 76 aufgeschoben, die den Magnetkern 8 radial umschließt. Die Spule 76 wird dabei von einem Spulengehäuse 78 aus weichmagnetischem Werkstoff radial umgriffen, in das kopf- und bodenseitig jeweils eine gleichfalls aus weichmagnetischen Werkstoff bestehende Ringscheibe 80, 82 eingepreßt ist, durch deren Öffnungen sich ein Teil des Magnetkerns 8 bzw. ein Teil der Führungshülse 6 erstreckt.

In Fig.3 ist eine weitere Ausführungsform gemäß der Erfindung gezeigt. Im Unterschied zum bevorzugten Ausführungsbeispiel hat der im Boden 84 der Führungshülse 86 ausgebildete Ventilsitz 88 einen wesentlich kleineren Durchmesser. Die Führungshülse 86 hat außerdem keinen angeformten hülsenförmigen Fortsatz, vielmehr steht der Ventilsitz 88 mit einer mit der Magnetventilachse 24 koaxialen Filteröffnung 90 des becherförmigen Filterelements 92 in Verbindung, welche den Ventilauslaß bildet. Das Filterelement 92 wird durch seinen Umgriff um die Führungshülse 86 an dieser zentriert. In den Boden des Filterelements 92 ist ein Dichtring 94 integriert, welcher die Filteröffnung 90 mit radialem Abstand umschließt. Der Filteröffnung 90 ist ein Auslaßkanal 96 im Ventilblock 4 strömungsmäßig nachgeordnet, welcher sich stufenförmig erweitert. Für die restlichen Bauteile und Baugruppen wird auf die Ausführungen und Bezugszahlen des in Fig.1 dargestellten bevorzugten Ausführungsbeispiels verwiesen.

Bei erregter Spule wird eine magnetische Kraft auf den axial beweglichen Anker 12 in Richtung des Magnetkerns 8 ausgeübt, wodurch sich der Anker 12 gegen die Federkraft der Ventilschließfeder 14 bewegt und die Kugel 18 vom Ventilsitz 20 abhebt. Das Magnetventil 1 befindet sich dann in seinem geöffneten Zustand und Bremsflüssigkeit kann ausgehend vom Radbremszylinder, die Einlaßkanäle 36, das Filterelement 38, den Ventileinlaß 34, den Ventilauslaß 28 und den Auslaßkanal 32 passierend, zur Rückförderpumpe zurückströmen.

## Patentansprüche

1. Magnetventil (1), insbesondere für eine schlupfgeregelte, hydraulische Fahrzeugbremsanlage, mit einer Ventilträgerbuchse (58) und einer sich durch eine Öffnung (57) der Ventilträgerbuchse (58) erstreckenden und mit dieser durch eine Verstemmung (62) formschlüssig verbundenen Führungshülse (6; 86), in welcher ein Anker (12) mit einem Ventilschließkörper (18) relativ zu einem Magnetkern (8) und einem Ventilsitz (20; 88) verschieblich aufgenommen sind, und mit einer die Führungshülse (6; 86) im Bereich des Magnetkems (8) umschließenden elektrischen Spule (76), **dadurch gekennzeichnet, daß** an der Führungshülse (6; 86) ein als eine nach radial außen weisende Faltung ausgebildeter Flansch (40) angeformt und durch die Verstemmung (62) gegen einen radial inneren, stufenförmigen Absatz (60) der Ventilträgerbuchse (58) fluid- und druckdicht verspannt ist, wobei der Flansch (40) ebene, sich quer zu einer Magnetventilachse (24) erstreckende Stimabschnitte (52) aufweist, welche im wesentlichen ohne Zwischenraum aneinander anliegen.

2. Magnetventil nach Anspruch 1, **dadurch gekennzeichnet, daß** sich der Flansch (40) bis an die radial innere Umfangswand der Öffnung (57) der Ventilträgerbuchse (58) erstreckt.

3. Magnetventil nach Anspruch 1 oder 2, **dadurch gekennzeichnet, daß** vom Rand der Öffnung (57) der Ventilträgerbuchse (58) her Werkstoff gegen den Flansch (40) der Führungshülse (6; 86) gedrängt und der Flansch (40) durch einen Werkstoffwulst (64) überdeckt ist.

4. Magnetventil nach Anspruch 1, **dadurch gekennzeichnet, daß** die Führungshülse (6; 86) an ihrem vom Magnetkern (8) abgewandten Ende einen angeformten Boden (22; 84) hat, in welchem der Ventilsitz (20; 88) als eine mit der Magnetventilachse (24) koaxiale Öffnung ausgebildet ist.

5. Magnetventil nach Anspruch 4, **dadurch gekennzeichnet, daß** es am vom Magnetkern (8) abgewandten Ende der Führungshülse (6; 86) einen als Querloch ausgebildeten Ventileinlaß (34) aufweist.

6. Magnetventil nach den Anspruch 5, **dadurch gekennzeichnet, daß** über das vom Magnetkern (8) abgewandte Ende der Führungshülse (6; 86) ein becherförmiges Filterelement (38; 92) gestülpt ist, welches die Führungshülse (6; 86) im Bereich des Ventileinlaßes (34) umschließt und an seinem Boden eine Filteröffnung (39; 90) aufweist.

7. Magnetventil nach Anspruch 6, **dadurch gekennzeichnet, daß** der Ventilsitz (20) an einem sich vom Boden (22) der Führungshülse (6) weg erstreckenden, hülsenförmigen Fortsatz (26) ausgebildet ist, welcher durch die Filteröffnung (39) ragt und einen Ventilauslaß (28) bildet.

8. Magnetventil nach Anspruch 7, **dadurch gekennzeichnet, daß** auf den hülsenförmigen Fortsatz (26) ein Dichtring (42) aufgesetzt ist, welcher mit seiner radial äußeren Umfangsfläche in die Filteröffnung (39) eingreifend das Filterelement (38) trägt.

9. Magnetventil nach Anspruch 6, **dadurch gekennzeichnet, daß** der Ventilsitz (88) mit der Filteröffnung (90) in Verbindung steht, welche einen Ventilauslaß bildet.

10. Magnetventil nach Anspruch 9, **dadurch gekennzeichnet, daß** in den Boden des Filterelements (92) ein Dichtring (94) integriert ist, welcher die Filteröffnung (90) mit radialem Abstand umschließt.

11. Magnetventil nach Anspruch 8 oder 10, **dadurch gekennzeichnet, daß** der Dichtring (42; 94) einerseits am Boden (22; 84) der Führungshülse (6; 86) und andererseits am Boden (30) einer Aufnahmebohrung (2) eines Ventilsblocks (4) angreift, in dem das Magnetventil (1) aufgenommen ist.

## Claims

1. Solenoid valve (1), in particular for a hydraulic vehicle braking system with anti-slip control, having a valve carrier bushing (58) and a guide sleeve (6; 86) which extends through an opening (57) in the valve carrier bushing (58) and is connected in a form-fitting manner to the said bushing by means of a caulked connection (62) and in which an armature (12) with a valve-closing body (18) is held displaceably relative to a magnet core (8) and a valve seat (20; 88), and having an electric coil (76) surrounding the guide sleeve (6; 86) in the region of the magnet core (8), **characterized in that** a flange (40) designed as a radially outwardly pointing fold is integrally formed on the guide sleeve (6; 86) and is clamped by means of the caulked connection (62) against a radially inner, step-shaped shoulder (60) of the valve carrier bushing (58) in a fluid-and pressure-tight manner, the flange (40) having planar end.sections (52) which extend transversely with respect to a solenoid-valve axis (24) and bear against each other essentially without any clearance.

2. Solenoid valve according to Claim 1, **characterized in that** the flange (40) extends as far as the radially inner circumferential wall of the opening (57) in the valve carrier bushing (58).

3. Solenoid valve according to Claim 1 or 2, **characterized in that** material is pushed against the flange (40) of the guide sleeve (6; 86) from the edge of the opening (57) of the valve carrier bushing (58), and the flange (40) is covered by a material bead (64).

4. Solenoid valve according to Claim 1, **characterized in that** the guide sleeve (6; 86) has, at its end facing away from the solenoid core (8), an integrally formed base (22; 84) in which the valve seat (20; 88) is designed as an opening coaxial with the solenoid-valve axis (24).

5. Solenoid valve according to Claim 4, **characterized in that** it has, at that end of the guide sleeve (6; 86) which faces away from the solenoid core (8), a valve inlet (34) which is designed as a transverse hole.

6. Solenoid valve according to Claim 5, **characterized in that** a cup-shaped filter element (38; 92) is pulled over that end of the guide sleeve (6; 86) which faces away from the solenoid core (8), the said filter element surrounding the guide sleeve (6; 86) in the region of the valve inlet (34) and having a filter opening (39; 90) on its base.

7. Solenoid valve according to Claim 6, **characterized in that** the valve seat (20) is formed on a sleeve-shaped extension (26) which extends away from the base (22) of the guide sleeve (6), protrudes through the filter opening (39) and forms a valve outlet (28).

8. Solenoid valve according to Claim 7, **characterized in that** a sealing ring (42) is placed onto the sleeve-shaped extension (26) and, with its radially outer circumferential surface engaging in the filter opening (39), supports the filter element (38).

9. Solenoid valve according to Claim 6, **characterized in that** the valve seat (88) is connected to the filter opening (90) which forms a valve outlet.

10. Solenoid valve according to Claim 9, **characterized in that** a sealing ring (94) which surrounds the filter opening (90) at a radial distance is integrated in the base of the filter element (92).

11. Solenoid valve according to Claim 8 or 10, **characterized in that** the sealing ring (42; 94) engages at one end on the base (22; 84) of the guide sleeve (6; 86) and at the other end on the base (30) of a receiving hole (2) in a valve block (4) in which the solenoid valve (1) is accommodated.

## Revendications

1. Electrovanne (1), notamment pour un système de freinage hydraulique anti-patinage de véhicule, comportant un manchon de support de vanne (58) et un manchon de guidage (6, 86) passant dans l'ouverture (57) du manchon de support de la vanne (58) en étant reliés par une liaison de forme par matage (62) à celui-ci, et qui reçoit de manière coulissante un induit (12) avec un organe d'obturation (18) de la vanne, de façon coulissante par rapport au noyau (8) et au siège de vanne (20, 88), ainsi qu'une bobine électrique (76) entourant le manchon de guidage (6, 86) dans la zone du noyau magnétique (8),
**caractérisée en ce qu'**
une bride (40) est réalisée par un pliage dirigé radialement vers l'extérieur du manchon de guidage (6, 86) et cette bride est serrée de manière étanche au liquide et à la pression par le matage (62) contre un épaulement en forme de gradin (60) dirigé radialement vers l'intérieur du manchon de support de la vanne (58),
la bride (40) ayant des segments frontaux (52) plans, s'étendant transversalement par rapport à l'axe longitudinal (24) de l'électrovanne, et ces segments sont appliqués l'un contre l'autre pratiquement sans laisser d'intervalle.

2. Electrovanne selon la revendication 1,
**caractérisée en ce que**
la bride (40) s'étend jusqu'au niveau de la paroi périphérique radialement intérieure de l'ouverture (57) du manchon de support de la vanne (58).

3. Electrovanne selon la revendication 1 ou 2,
**caractérisée en ce qu'**
à partir du bord de l'ouverture (57) du manchon de support de la vanne (58), la matière est refoulée contre la bride (40) du manchon de guidage (6, 86) et la bride (40) est recouverte par un bourrelet de matière (62).

4. Electrovanne selon la revendication 1,
**caractérisée en ce que**
le manchon de guidage (10, 86) présente un fond (22, 84) réalisé à son extrémité opposée à celle du noyau magnétique (8), et le siège de vanne (20, 88) est formé dans ce fond, ce siège ayant une ouverture coaxiale à l'axe de l'électrovanne.

5. Electrovanne selon la revendication 4,
**caractérisée en ce qu'**
elle présente une entrée de vanne (34) en forme de trou transversal réalisé à l'extrémité du manchon de guidage (6, 86) à l'opposé du noyau magnétique (8).

6. Electrovanne selon la revendication 5,
**caractérisée en ce que**
l'extrémité du manchon de guidage (6, 86) à l'opposé du noyau magnétique (8) comporte un élément de filtre (38, 92) en forme de gobelet, emmanché sur cette extrémité et qui entoure le manchon de guidage (6, 86) au niveau de l'entrée de vanne (34) et son fond comporte une ouverture de filtre (39, 90).

7. Electrovanne selon la revendication 6,
**caractérisée en ce que**
le siège de vanne (20) comporte un prolongement (26) en forme de manchon qui vient en saillie en s'écartant du fond (22) du manchon de guidage (6), ce prolongement traversant l'ouverture (39) du filtre et constituant une sortie de vanne (28).

8. Electrovanne selon la revendication 7,
**caractérisée en ce qu'**
un joint d'étanchéité (42) est engagé sur le prolongement (26) en forme de manchon, ce joint portant l'élément de filtre (38) par sa surface périphérique radiale extérieure qui pénètre dans l'ouverture (39) du filtre.

9. Electrovanne selon la revendication 6,
**caractérisée en ce que**
le siège de vanne (88) communique avec l'ouverture de filtre (90) constituant la sortie de vanne.

10. Electrovanne selon la revendication 9,
**caractérisée par**
un joint d'étanchéité (94) intégré dans le fond de l'élément de filtre (92), ce joint entourant l'ouverture de filtre (90) avec un certain intervalle radial.

11. Electrovanne selon la revendication 8 ou 10,
**caractérisée en ce que**
le joint d'étanchéité (42, 94) est logé, d'une part, dans le fond (22, 84) du manchon de guidage (6, 86), et, d'autre part, dans le fond (30) d'un perçage de réception (2) d'un bloc de vanne (4) logeant l'électrovanne (1).
